# EUROPÄISCHE PATENTSCHRIFT

(11) **EP 4 174 335 B1**
(45) Veröffentlichungstag und Bekanntmachung des Hinweises auf die Patenterteilung: **06.05.2026**
(21) Anmeldenummer: 21205461.3
(22) Anmeldetag: 29.10.2021
(51) Int. Cl.: F16D 23/12

(54) **SPIELAUSGLEICHSVORRICHTUNG, INSBESONDERE FÜR EINE VERSCHLUSSVORRICHTUNG FÜR EIN TOR EINES FAHRZEUGS**
PLAY COMPENSATION DEVICE, IN PARTICULAR FOR A CLOSING DEVICE FOR A DOOR OF A VEHICLE
DISPOSITIF DE COMPENSATION DE JEU, EN PARTICULIER POUR UN DISPOSITIF DE VERROUILLAGE D'UNE PORTE DE VÉHICULE

(43) Veröffentlichungstag der Anmeldung: 03.05.2023
(73) Patentinhaber: Airbus Operations GmbH, 21129 Hamburg (DE)
(72) Erfinder: OHLE, Sören, 21129 Hamburg (DE)
(74) Vertreter: LKGLOBAL Partnerschaftsgesellschaft mbB

(56) Entgegenhaltungen:
- DE-A1- 102014 210 976
- DE-A1- 102019 207 125
- KR-A- 20170 096 439

## Beschreibung

### Technisches Gebiet

Die vorliegende Beschreibung betrifft eine Spielausgleichsvorrichtung, eine Verschlussvorrichtung für ein Frachttor eines Flugzeugs sowie ein Flugzeug mit einem Frachttor und/oder mindestens einer Spielausgleichsvorrichtung.

### Technischer Hintergrund

Das Frachttor eines größeren Verkehrsflugzeugs weist üblicherweise eine beträchtliche Größe mit Kantenlängen von mehreren Metern auf und ist üblicherweise mit einer Oberkante schwenkbar an einem etwa parallel zur Flugzeuglängsachse angeordneten Scharnier gelagert. Eine der Oberkante entgegengesetzte Unterkante wird beim Öffnen und Schließen des Frachttors folglich auf einer Kreisbahn um das Scharnier herum bewegt. Wird das Frachttor geöffnet, wird es um das Scharnier nach oben geschwenkt und die Unterkante könnte bei der Bewegung etwa auf Höhe der Oberkante oder etwas oberhalb zum Halten kommen. Beim Schließen wird die Unterkante mithilfe mehrerer Verschlüsse an dem Rumpf verriegelt. Üblicherweise sind mehrere, in einem Abstand zueinander angeordnete Verschlüsse vorgesehen, welche mit entsprechenden Verschlusselementen in Eingriff geraten.

Aufgrund der Größe des Frachttors, der allgemeinen Elastizität üblicher Flugzeugstrukturen und wechselnder Belastung am Boden durch Winde sowie während des Flugs durch Massen- und Trägheitskräfte kann sich das Frachttor und die umliegende Struktur elastisch verformen. Es ist daher sinnvoll, Mittel zu verwenden, die eindeutige Lastpfade zwischen der Unterkante des Frachttors und der Struktur, beispielsweise durch exakte Positionierung der Unterkante des Frachttors, realisieren können.

Aus EP 2 212 192 B1 ist ein Verriegelungsmechanismus für eine Frachttür in einer Rumpfzelle eines Flugzeugs bekannt, wobei der Verriegelungsmechanismus eine Anzahl von Rumpfzellenbeschlägen im Bereich einer Ladekante, eine entsprechende Anzahl von Frachttürbeschlägen und ein Schiebeelement aufweist, wobei die Verriegelung der Frachttür durch das Schiebeelement erfolgt und die Frachttürbeschläge in formschlüssigen Verriegelungseingriff mit den Rumpfzellenbeschlägen bringbar sind, wobei Umfangslasten der Rumpfzelle durch eine Lastabtragungsfläche übertragen werden und radiale Lasten im Wesentlichen von dem Schiebeelement aufgenommen werden. Der Frachttürbeschlag ist dort weiterhin mit einem Sicherungsmechanismus zur zusätzlichen Eigensicherung des Schiebeelements gegen unbeabsichtigtes Öffnen versehen, der eine Sicherungsstange mit einem Sicherungsnocken aufweist, wobei der Sicherungsnocken in einem verriegelten Zustand der Frachttür durch Verschwenken der Sicherungsstange in mindestens eine Sicherungsausnehmung im Schiebeelement einbringbar ist.

DE 10 2014 210976 offenbart eine Reibungskupplung, insbesondere für eine Doppelkupplung, mit deren Hilfe eine Antriebswelle eines Kraftfahrzeugmotors mit mindestens einer Getriebeeingangswelle eines Kraftfahrzeuggetriebes gekuppelt werden kann.

### Zusammenfassung der Erfindung

Es ist eine Aufgabe der Erfindung, eine Vorrichtung vorzuschlagen, bei der eindeutige Lastpfade an mehreren, gemeinsam wirkenden und voneinander unabhängig positionierten und elastizitätsbedingt einem Spiel unterworfenen Verschlussvorrichtungen erreichbar sind, insbesondere an einem Frachttor eines Flugzeugs entlang einer Flugzeuglängsachse.

Die Aufgabe wird gelöst durch eine Spielausgleichsvorrichtung mit den Merkmalen des unabhängigen Anspruchs 1. Vorteilhafte Ausführungsformen und Weiterbildungen sind den Unteransprüchen und der nachfolgenden Beschreibung zu entnehmen.

Es wird eine Spielausgleichsvorrichtung zur Anordnung an einer Oberfläche einer ersten Komponente, die mit einer Oberfläche einer zweiten Komponente einen Zwischenraum variabler Größe einschließt, vorgeschlagen. Die Spielausgleichsvorrichtung weist eine rotierbare Scheibe mit einer ersten Seite und einer davon abgewandten zweiten Seite, eine Kupplung, die mit einer Antriebswelle verbindbar ist, und einen drehbar gelagerten Wellenabschnitt, an dem die Scheibe angeordnet ist und der mit der Kupplung verbunden ist, auf, wobei die erste Seite der rotierbaren Scheibe eben ist, wobei die rotierbare Scheibe in dem Zwischenraum an der ersten Komponente lagerbar ist, sodass die erste Seite mit der ersten Komponente zumindest bereichsweise in Flächenkontakt geraten und mit der zweiten Seite von der ersten Komponente abstehen kann, wobei die zweite Seite zumindest über eine Sektorfläche eine in Umfangsrichtung ansteigende Dicke als lokales Abstandsmaß zwischen der ersten Seite und der zweiten Seite aufweist, und wobei die Kupplung dazu ausgebildet ist, eine Rotation der Antriebswelle auf die rotierbare Scheibe zu übertragen, sodass die Scheibe in einen bündigen Flächenkontakt mit der ersten Komponente und der zweiten Komponente gerät.

Die erfindungsgemäße Spielausgleichsvorrichtung dient dazu, ein mechanisches Spiel zwischen der ersten Komponente und der zweiten Komponente ausgleichen zu können. Hierzu ist der momentane Abstand zwischen den beiden Komponenten zunächst unerheblich, denn durch die Bauart der Scheibe mit ihrer in Umfangsrichtung ansteigenden Dicke kann sie auch bei ungenau ausgerichteten Komponenten diese kontaktieren und ihre Position gegebenenfalls entgegen elastischer Kräfte geringfügig anpassen. Das mechanische Spiel ist dabei dahingehend zu verstehen, dass zwischen der Oberfläche der ersten Komponente und der Oberfläche der zweiten Komponente ein gewisser Abstand vorliegt, der sich temporär durch Belastungen an den Komponenten ändern kann. Innerhalb dieses Abstandes ist die genannte Scheibe platziert, die durch ihre Formgebung dazu geeignet ist, bei Rotation um eine Drehachse lokal eine variable Dicke einzunehmen.

Ein Ziel ist, die Scheibe mit der ersten Seite an der ersten Komponente zu platzieren, sodass die erste Seite bündig an der Oberfläche der ersten Komponente anliegt. Durch Rotation der Scheibe bleibt die erste Seite aufgrund ihrer ebenen Fläche bevorzugt in ihrem Flächenkontakt mit der Oberfläche der ersten Komponente. Da allerdings die lokale Dicke variiert, füllt die Scheibe lokal den Zwischenraum zwischen der ersten Komponente und der zweiten Komponente in Abhängigkeit ihres momentanen Rotationswinkels unterschiedlich weit aus. Ist der Dickenverlauf der Scheibe an das zu erwartende Spiel zwischen der ersten Komponente und der zweiten Komponente angepasst, ist zu erwarten, dass bei einem bestimmten Rotationswinkel die zweite Seite auch in Flächenkontakt mit der Oberfläche der zweiten Komponente gerät. Folglich ist bei diesem Rotationswinkel der Zwischenraum zwischen der ersten Komponente und der zweiten Komponente vollständig ausgefüllt. In diesem Zustand kann daher eine Druckkraft zwischen der ersten Komponente und der zweiten Komponente über die Scheibe übertragen werden. Die ideale Kraftübertragungsrichtung ergibt sich als eine gedachte Linie, die sich durch die Kontaktflächen zwischen den Komponenten und der Scheibe erstreckt.

Wie eingangs erläutert könnte eine Unterkante eines Frachttors mit mehreren Verschlüssen ausgestattet werden, wobei das Spiel zwischen mechanischen Elementen der Verschlüsse und den damit verbindbaren Klauenelementen parallel zu der Unterkante verlaufen kann. Durch Platzierung der Scheibe zwischen der ersten Komponente als Teil eines Verschlusses und der zweiten Komponente als Teil eines Klauenelements könnte eine Kraftübertragung entlang der Erstreckung der Unterkante erfolgen.

Beim Einsetzen des Flächenkontakts zwischen der zweiten Seite der Scheibe und der Oberfläche der zweiten Komponente entsteht eine Gleitreibung zwischen der Scheibe und der zweiten Komponente. Mit zunehmender Rotation und damit zunehmender lokaler Dicke steigt die Anpresskraft der Scheibe an der zweiten Komponente und folglich kann eine Feinjustage der Position der beiden Komponenten zueinander erfolgen, wobei dies ein entsprechendes Drehmoment an der Antriebswelle erfordert.

Die rotierbare Scheibe sowie damit in Kontakt bringbare Flächen könnten aus einem metallischen Material hergestellt sein. Hierfür könnte sich entsprechend reib- und rostbeständige Stahl- oder Aluminiumlegierungen, Titan oder andere Metalle anbieten.

Die Scheibe könnte in einem einfachen Fall rund bzw. kreisrund sein. Wie weiter nachfolgend ausgeführt, könnte auch eine lokal abweichende Form vorgesehen sein, die einen zusätzlichen Zweck erfüllt.

Die zweite Seite der Scheibe könnte rampenförmig gestaltet sein, wobei radiale Oberflächenlinien auf der Oberfläche der zweiten Seite bevorzugt parallel zu der Oberfläche der ersten Seite sind bzw. senkrecht zu der Rotationsachse. Damit kann ein punktförmiger oder schräger Flächenkontakt mit der zweiten Komponente verhindert werden, der zu einer örtlichen, übermäßigen Beanspruchung der Komponente oder der Scheibe führen könnte. Die Scheibe wirkt durch diese Form wie ein Keil.

Die Antriebswelle ist eine externe Komponente, die mit der Spielausgleichsvorrichtung verbindbar ist. Wie weiter nachfolgend erläutert wird, kann dies etwa eine Sicherungsstange eines Verriegelungsmechanismus sein. Der Wellenabschnitt könnte mit einem Teil der Kupplung kombiniert oder separat hierzu ausgeführt sein.

Es ist vorstellbar, dass ein Übergang zwischen einem Bereich geringster Dicke und einem Bereich höchster Dicke der Scheibe vorgesehen ist, in dem die Dicke von der höchsten Dicke auf kleinem Raum zu der geringsten Dicke gleichmäßig oder gestuft übergeht. Ein hierzu vorgesehener Teilsektor ist jedoch nicht dafür vorgesehen, in einen Flächenkontakt mit einer der Komponenten zu geraten. Der Teilsektor könnte theoretisch auf ein unendlich kleines Winkelmaß reduziert werden, indem lediglich ein zu der Drehachse vertikaler Absatz vorgesehen ist. Zur Vermeidung von Kerbspannungen könnte es sich jedoch anbieten, den Teilsektor über einen Winkelbereich von beispielsweise 5-30° vorzusehen, in dem der Dickenverlauf wie beschrieben angepasst wird.

Insgesamt kann die Spielausgleichsvorrichtung eine mechanisch einfache Lösung realisieren, mit der ein variabler Abstand zwischen zwei Komponenten zur einfachen Übertragung von Kraft zur Realisierung eines definierten Kraftpfads zuverlässig ausgeglichen werden kann, ohne kostenintensive und komplexe Sensorik verwenden zu müssen. Sind mehrere Anordnungen erster und zweiter Komponenten vorgesehen, die gemeinschaftlich Lasten übertragen sollen, kann jeder dieser Anordnungen eine rotierbare Scheibe zugeordnet werden, sodass sämtliche Anordnungen denselben Lastenanteil übertragen können. Für den Antrieb der einzelnen Scheiben ist lediglich eine einzige Antriebswelle erforderlich, an den sich jeweils eine der betreffenden Scheibe zugeordnete Kupplung anschließt. Alle Scheiben gleichen dann zuverlässig den betreffenden Zwischenraum vollständig aus.

Die Kupplung könnte eine kraftschlüssige Kupplung umfassen, die dazu ausgebildet ist, einen Drehwinkel zwischen der Scheibe und der Antriebswelle bei der Montage manuell auf ein Maß des betreffenden Zwischenraums anzupassen. Bei der Montage kann beispielsweise eine manuelle Rotation der Scheibe mit einem bestimmten Maximaldrehmoment erfolgen. Ist dieses erreicht könnte die Kupplung in der entsprechenden rotatorischen Position der Antriebswelle fest verschraubt werden, sodass bei anschließender Rotation stets dieselbe Drehwinkelstellung der Scheibe eingestellt wird.

Die Kupplung könnte dazu ausgebildet sein, die Rotation der Antriebswelle nur bis zu einem vorgebbaren maximalen Drehmoment zu übertragen. Da die Kupplung die Rotation nur bis zu einem maximalen Drehmoment überträgt, kann zwar ein bündiger Kontakt mit der ersten Komponente und der zweiten Komponente hergestellt werden, wobei eine zu starke Verkeilung oder Verkantung weitgehend ausgeschlossen wird. Toleranzbedingte Abweichungen der Abmessungen der auszufüllenden Zwischenräume an mehreren aufeinanderfolgenden Verriegelungsvorrichtungen führen daher nicht zu einem erhöhten Kraftaufwand bzw. höheren Drehmoment an einer gemeinsamen Antriebwelle, um sämtliche Zwischenräume sicher zu schließen.

Die Kupplung könnte ein erstes Kupplungselement und ein zweites Kupplungselement aufweisen, die konzentrisch zueinander angeordnet und durch eine Torsionsfeder miteinander gekoppelt sind. Das maximal übertragbare Drehmoment ist von der Auslegung der Torsionsfeder abhängig. Es ist vorstellbar, dass bei einer kontinuierlichen Rotation des Wellenabschnitts die Torsionsfeder zunehmend gespannt wird und dabei inkrementell das abgegebene Drehmoment erhöht. Bei dieser Lösung ist das maximal übertragbare Drehmoment von der maximalen Federspannung am Ende einer Rotation des Wellenabschnitts abhängig. Neben einer gewissen Drehflexibilität wird auch eine axiale Verschiebbarkeit der zugehörigen Scheibe ermöglicht.

Um sicherzustellen, dass die Torsionsfederkupplung ein Rückdrehen erlaubt, kann eine zusätzliche Nocke in das erste Kupplungselement oder das zweite Kupplungselement integriert sein, wobei ein geeigneter Vorsprung oder ein anderes Eingriffsmittel an dem entsprechenden anderen Kupplungselement angeordnet sein könnte, um bei Rückdrehung mit der Nocke in Anschlag zu geraten.

Gemäß der Erfindung ist die Scheibe rund und weist zumindest in einem Bereich einen radialen Vorsprung auf, der zur axialen Verriegelung in eine radiale Ausnehmung rotierbar ist. Damit kann der Wellenabschnitt oder ein mit der Scheibe verbundenes Element in einer Richtung parallel zur Drehachse der Scheibe arretiert werden. Die erste Komponente und die zweite Komponente können dadurch zudem einen direkten Kraftpfad mit einem Strukturbauteil oder einem Element einer Verriegelungsvorrichtung realisieren, in dem die radiale Ausnehmung angeordnet ist. Folglich wird ein Kraftpfad zwischen der ersten Komponente, der Scheibe und der die Ausnehmung aufweisenden Komponente sowie der zweiten Komponente, der Scheibe und der die Ausnehmung aufweisenden Komponente ausgebildet. Weiter nachfolgend werden weitere Aspekte dieser axialen Verriegelung ausgeführt.

Die zweite Seite könnte eine Form aufweisen, durch die die Scheibe selbsthemmend ist, sodass eine axial auf die zweite Seite einwirkende Kraft nicht zu einer Rotation der Scheibe führt. Mit einer an die Haftreibung angepassten Steigung der zweiten Oberfläche könnte, ähnlich wie bei einem Gewinde, abhängig von dem Haftreibungsbeiwert der Scheibe und der zweiten Komponente eine Selbsthemmung realisiert werden. Dies bedeutet, dass bei Druckbelastung der Scheibe in eine Richtung parallel zu ihrer Drehachse eine Rotation der Scheibe aufgrund der Haftreibung nicht möglich ist. Ein Arretieren der Scheibe oder der Antriebswelle ist daher nicht notwendig.

Die zweite Seite könnte eine Helixform und eine Steigung von 2 bis 4° aufweisen. Eine solche Form kann eine harmonische, stetige Steigerung des lokalen Abstandes zwischen der ersten Seite und der zweiten Seite erreichen. Bei Verwendung von Stahlkomponenten kann bei dieser Steigung eine Selbsthemmung erreicht werden. Optional könnte die Steigung bis zu 5° betragen, falls erforderlich.

Die Scheibe könnte schwimmend gelagert sein. Dies erlaubt, etwaige Verspannungen und Schrägstellungen der Scheibe zu vermeiden. Beispielsweise kann dies durch eine federnde Lagerung der Scheibe, durch eine axial verschiebbare Welle-Nabe-Verbindung oder ähnliches realisiert werden.

Die Erfindung betrifft ferner eine Verriegelungsvorrichtung für ein Tor, insbesondere ein Frachttor, eines Fahrzeugs, aufweisend mindestens einen Gabelbeschlag mit zwei voneinander beabstandeten Gabelelementen, mindestens ein Klauenelement, das in dem mindestens einen Gabelbeschlag zwischen den Gabelelementen platzierbar ist, ein Schiebeelement zum Herstellen einer formschlüssigen Verbindung mit dem Gabelbeschlag und dem Klauenelement, und mindestens eine Spielausgleichsvorrichtung nach der vorhergehenden Beschreibung, wobei das Klauenelement eine lichte Breite aufweist, die geringer als der Abstand zwischen den Gabelelementen ist, wobei eines der Gabelelemente des betreffenden Gabelbeschlags die erste Komponente und das Klauenelement die zweite Komponente ist, und wobei die Scheibe zwischen dem betreffenden Gabelelement und dem Klauenelement angeordnet ist, um den Zwischenraum zwischen dem betreffenden Gabelelement und dem Klauenelement auszufüllen. Die Verriegelungsvorrichtung könnte wie in der erwähnten EP 2 212 192 B1 ausgeführt sein und mit der erfindungsgemäßen Spielausgleichsvorrichtung ausgestattet sein. Die formschlüssige Verbindung zwischen dem Schiebeelement, dem Gabelbeschlag und dem Klauenelement kann zur Kraftübertragung in der y-z-Ebene führen, d.h. in einer durch die Quer- und Hochachse des Fahrzeugs aufgespannten Ebene. Die Spielausgleichsvorrichtung erreicht dann einen Formschluss in der dazu vertikalen x-Richtung.

Das sich schließende Tor könnte mit einer Führungsrolle parallel zu einer Längsachse des Fahrzeugs zentriert werden, so dass das betreffende Klauenelement in den zugehörigen Gabelbeschlag eingeführt wird. Aufgrund von unvermeidlichem Führungsspiel und außermittiger Klauenlage infolge von Belastungen an dem Tor ist der Zwischenraum zwischen dem Klauenelement und dem betreffenden Gabelelement großzügig bemessen. So könnte zwar ein kollisionsfreies Schließen und kraftfreies Öffnen des Tores ermöglicht werden, aber das Klauenelement und der Gabelbeschlag sind für eine gleichförmige und sofort ansprechende Übertagung von Lasten in der Längsrichtung ungeeignet.

Nach dem Verschieben des Schiebeelements wird die Antriebswelle rotiert, wodurch sich der Zwischenraum schließt. Bei möglicherweise verringerter Breite des Zwischenraums wird das Klauenelement unter Kraftaufwand in seine ursprüngliche Position relativ zu dem betreffenden Gabelelement zurückgebracht.

Aufgrund von Torsionsnachgiebigkeit sollte der Wellenantrieb nah an der betreffenden Scheibe, bei Verwendung mehrerer Scheiben also in der Mitte des Tores, positioniert werden. Geeignet wäre ein Schneckenantrieb, der sich durch ein großes Übersetzungsverhältnis und zusätzlich durch Selbsthemmung auszeichnet.

Die Verriegelungsvorrichtung könnte ferner eine drehbare Sicherungsstange aufweisen, die mindestens eine Sicherungsnocke aufweist, wobei die jeweilige Kupplung der mindestens einen Spielausgleichsvorrichtung mit der drehbaren Sicherungsstange als Antriebswelle verbunden ist, und wobei die mindestens eine Sicherungsnocke in einem verriegelten Zustand des Tors durch Drehen der Sicherungsstange in mindestens eine Ausnehmung in dem Schiebeelement einbringbar ist. Die Sicherungsstange kann sich durch Bohrungen des Klauenelements oder des Gabelelements erstrecken. Durch Rotieren kann die Sicherheitsnocke in eine entsprechende Ausnehmung in dem Schiebeelement gebracht werden, sodass eine horizontale Verschiebung des Schiebeelementes und damit ein unbeabsichtigtes Öffnen des Tors durch unbeabsichtigtes Verschieben des Schiebeelementes verhindert wird.

Die Spielausgleichsvorrichtung könnte, wie vorangehend dargestellt, mit einem radialen Vorsprung ausgebildet sein, wobei die Ausnehmung in dem Schiebeelement angeordnet sein könnte. Auch damit könnte eine horizontale Verschiebung des Schiebeelementes und damit ein unbeabsichtigtes Öffnen des Tors durch unbeabsichtigtes Verschieben des Schiebeelementes verhindert werden. Die Scheibe erfüllt neben der Übertragung von Lasten in Längsrichtung daher eine zusätzliche Funktion. Nach einem geringen Drehwinkel könnte der Vorsprung als Nocke in die Ausnehmung des Schiebeelements geraten und ihn gegen Verschiebung sichern. Die Ausnehmung im Schiebeelement könnte gerundet sein, um die Kerbwirkung zu minimieren.

Das Antriebsmoment könnte reduziert werden, indem zuerst die Scheibe und danach das Schiebeelement betätigt wird. In diesem Fall könnte ein zusätzlicher torsionsfederbelasteter Hebel auf der Antriebswelle zwischen zwei benachbarten Gabelbeschlägen angeordnet werden. Die Kerbwirkung im hoch belasteten Bereich des Schiebeelements entfiele dann.

Die Verriegelungsvorrichtung könnte mehrere voneinander beabstandete Gabelbeschläge, mehrere Klauenelemente, die jeweils einem Gabelbeschlag zugeordnet sind, und für mindestens einen Gabelbeschlag mindestens eine genannte Spielausgleichsvorrichtung, wobei die Kupplungen der Spielausgleichsvorrichtungen mit derselben Antriebswelle verbunden sind. Diese kann, wie bereits erwähnt, die Sicherungsstange sein. Es ist vorstellbar, dass im Falle der Verwendung der kraftschlüssigen Kupplung die Antriebswelle in mehrere Segmente unterteilt ist und jeweils eine Spielausgleichsvorrichtung einem Segment zugeordnet ist. Mehrere Segmente können dann durch die jeweilige Kupplung der in Laufrichtung nachfolgenden Spielausgleichsvorrichtung miteinander verbunden sein. Jeder Gabelbeschlag oder lediglich eine Teilmenge der Gabelbeschläge kann mit mindestens einer Spielausgleichsvorrichtung ausgestattet sein.

Bei der Verwendung mehrerer Gabelbeschläge mit mehreren Spielausgleichsvorrichtungen kann in einer ersten Variante eine Segmentierung einer Antriebswelle durchgeführt werden. Die einzelnen Segmente werden dabei, wie vorangehend erwähnt, durch kraftschlüssige Kupplungen verbunden. Die einzelnen Kupplungen sind dabei bevorzugt genau zu synchronisieren. Jede Spielausgleichsvorrichtung ist dabei drehstarr, wobei die Welle-Nabe-Verbindung eine axiale Verschiebbarkeit der Scheibe erlaubt.

Wie vorangehend dargelegt kann auch eine durchgehende Antriebswelle eingesetzt werden. Je Spielausgleichsvorrichtung ist dadurch eine drehflexible und zudem axial verschiebliche Kupplung zwischen der gemeinsamen starren Antriebswelle und dem Wellenabschnitt mit verbundener Scheibe vorgesehen, wobei die das Drehmoment begrenzende Kupplung mit der gemeinsamen Antriebswelle kraftschlüssig verbunden wird und daher auch eine grobe Synchronisierung der einzelnen Scheiben ausreichen würde.

Jedem Paar aus Gabelbeschlag und Klauenelement könnten zwei Spielausgleichsvorrichtungen zugeordnet sein, die beidseitig an das Klauenelement anschließen. Damit kann ein verlängerter Kraftpfad über das Klauenelement geschaffen werden, der zur Übertragung von Kräften in zwei einander entgegengesetzten Richtungen genutzt werden kann. Es können folglich nicht nur Drucckräfte in einer Richtung von der zweiten Komponente auf die erste Komponente übertragen werden, sondern auch von der ersten Komponente an die zweite Komponente, ohne ein Rutschen einer der Komponenten.

Alternativ könnten bei aufeinanderfolgenden Gabelbeschlägen wechselnde Seiten der Klauenelemente mit jeweils einer Spielausgleichsvorrichtung versehen werden, um die Kraftübertragung in beide Richtungen zu ermöglichen.

Die Erfindung betrifft weiterhin ein Fahrzeug, aufweisend einen Rumpf mit mindestens einem schwenkbar daran angeordneten Tor, sowie einer Verriegelungsvorrichtung gemäß der vorhergehenden Beschreibung.

Das Fahrzeug kann ein Flugzeug sein und das Tor könnte ein Frachttor des Flugzeugs sein.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a-1b: schematische Darstellungen eines ersten Ausführungsbeispiels.
- Fig. 2a-2b: schematische Darstellungen eines zweiten Ausführungsbeispiels.
- Fig. 3a-4c: unterschiedliche Darstellungen der Scheibe in verschiedenen Positionen.
- Fig. 5: ein Flugzeug.

### Detaillierte Beschreibung von Ausführungsbeispielen

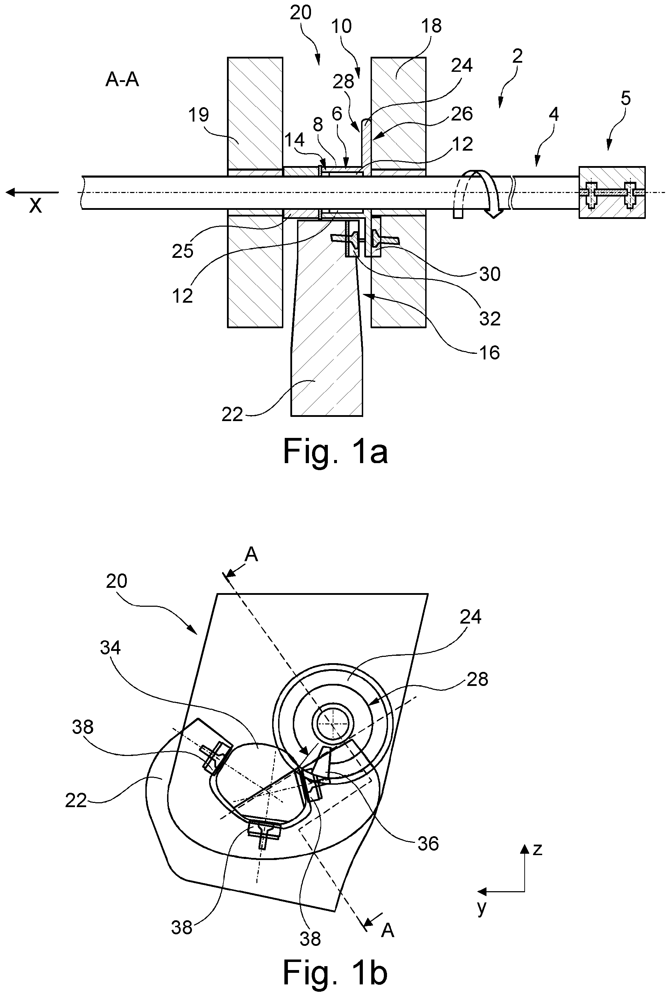

Fig. 1 zeigt einen Teil einer Verriegelungsvorrichtung 2 für ein Tor, insbesondere ein Frachttor, eines Fahrzeugs in einem schematischen Seitenschnitt. Hier ist eine drehbare Sicherungsstange 4 als Antriebswelle vorgesehen, die über eine kraftschlüssige Kupplung 5 eine Verbindung mit einer Welle-Nabe-Verbindung 6 herstellt, die wiederum mit einem Wellenabschnitt 8 einer Spielausgleichsvorrichtung 10 verbunden ist. Hier ist die Sicherungsstange 4 bzw. die Antriebswelle segmentiert und jedes Segment ist einer einzelnen Spielausgleichsvorrichtung 10 zugeordnet. Mehrere Segmente können dann durch die jeweilige Kupplung 5 der in Laufrichtung nachfolgenden Spielausgleichsvorrichtung 19 miteinander verbunden sein.

Die Welle-Nabe-Verbindung 6 weist eine Außenverzahnung 12 an der Sicherungsstange 4 und eine Innenverzahnung 14 an dem Wellenabschnitt 8 auf. Die Innenverzahnung 14 weist eine größere Länge auf als die Außenverzahnung 12, sodass ein Positionsausgleich in x-Richtung (in der Zeichnungsebene nach links bzw. rechts gerichtet) zwischen der Sicherungsstange 4 und dem Wellenabschnitt 8 möglich ist.

Die Spielausgleichsvorrichtung 10 ist in einem Zwischenraum 16 zwischen einem ersten Gabelelement 18 eines Gabelbeschlags 20 und einem Klauenelement 22 angeordnet. Der Gabelbeschlag 20 könnte etwa an einem strukturfesten Teil des betreffenden Fahrzeugs angeordnet sein, während das Klauenelement 22 an dem betreffenden Tor angeordnet sein kann. Dies kann jedoch auch umgekehrt sein. Der Gabelbeschlag 20 weist ein zweites Gabelelement 19 auf, das in einem Abstand von dem ersten Gabelelement 18 angeordnet ist.

Eine Scheibe 24 wird über die Welle-Nabe-Verbindung 6 durch die Sicherungsstange 4 rotiert. Eine erste Seite 26 der Scheibe 24 ist dem ersten Gabelelement 18 zugewandt und mit einer ebenen Oberfläche ausgeführt. Zwischen der ersten Seite 26 und der zweiten Seite 28 schließt die Scheibe 24 eine in Umfangsrichtung ansteigende Dicke auf und ist dem Klauenelement 22 zugewandt. Zwischen dem Wellenabschnitt 8 und dem gegenüberliegenden zweiten Gabelelement 19 ist eine Distanzbuchse 25 zur Vorpositionierung der Scheibe 24 angeordnet. Durch die Welle-Nabe-Verbindung 6 ist die Scheibe 24 zudem schwimmend gelagert.

An dem ersten Gabelelement 18 ist eine erste Kontaktplatte 30 angeordnet und ist zu dem Klauenelement 22 gewandt. An dem Klauenelement 22 ist indes eine zweite Kontaktplatte 32 angeordnet, die zu dem ersten Gabelelement 18 weist. Der Zwischenraum 16 zwischen der ersten Kontaktplatte 30 und der zweiten Kontaktplatte 32 wird durch die Scheibe 24 zunehmend ausgefüllt, wenn sie durch die Sicherungsstange 4 rotiert wird und die lokale Dicke zwischen den beiden Kontaktplatten 30 und 32 zunimmt. Ist die Scheibe 24 beim Kontaktieren beider Kontaktplatten 30 und 32 noch nicht vollständig rotiert, werden die Kontaktplatten 30 und 32 bis zur Endposition der Scheibe 24 auseinandergedrängt. Dann kann eine Kraft von dem Klauenelement 22 über die Scheibe 24 in das erste Gabelelement 24 übertragen werden. Bei dem Vorgang der Rotation kann die Scheibe 24 eine in x-Richtung erfolgende Ausgleichsbewegung vornehmen, da die Welle-Narbe-Verbindung 6 einen axialen Ausgleich erlaubt.

Wie vorangehend dargelegt kann die Sicherungsstange 4 segmentiert sein, wobei die einzelnen Segmente jeweils einer Spielausgleichsvorrichtung 10 zugeordnet sind. Toleranzen in der Ausdehnung der zugehörigen Zwischenräume können durch Einstellung der Kupplungen 5 ausgeglichen werden.

In Fig. 1b ist ein Schiebeelement 34 zu sehen, in das das Klauenelement 22 eingreift. Das Schiebeelement 34 steht ferner in Kontakt mit dem Gabelbeschlag 20. Hier ist eine Draufsicht auf die Scheibe 24 ersichtlich, wobei hier die zweite Seite 28 erkennbar ist. Ein Teilsektor 36 ist vorgesehen, in dem ein Dickenausgleich stattfindet. Hier springt die Dicke der Scheibe 24 von ihrer höchsten Dicke zu ihrer geringsten Dicke zurück. Dieser Teilsektor 36 könnte etwa einen Winkel von höchstens 30° aufweisen, bevorzugt weniger.

An dieser Stelle wird angemerkt, dass das Klauenelement 22 insgesamt drei individuelle Kontaktpunkte 38 vorsieht, mit denen das Schiebeelement 34 kontaktiert wird. Die Anzahl der Kontaktpunkte 38 könnte jedoch auch reduziert werden, sodass beispielsweise nur ein Kontaktpunkt 38 oder zwei Kontaktpunkte 38 vorliegen.

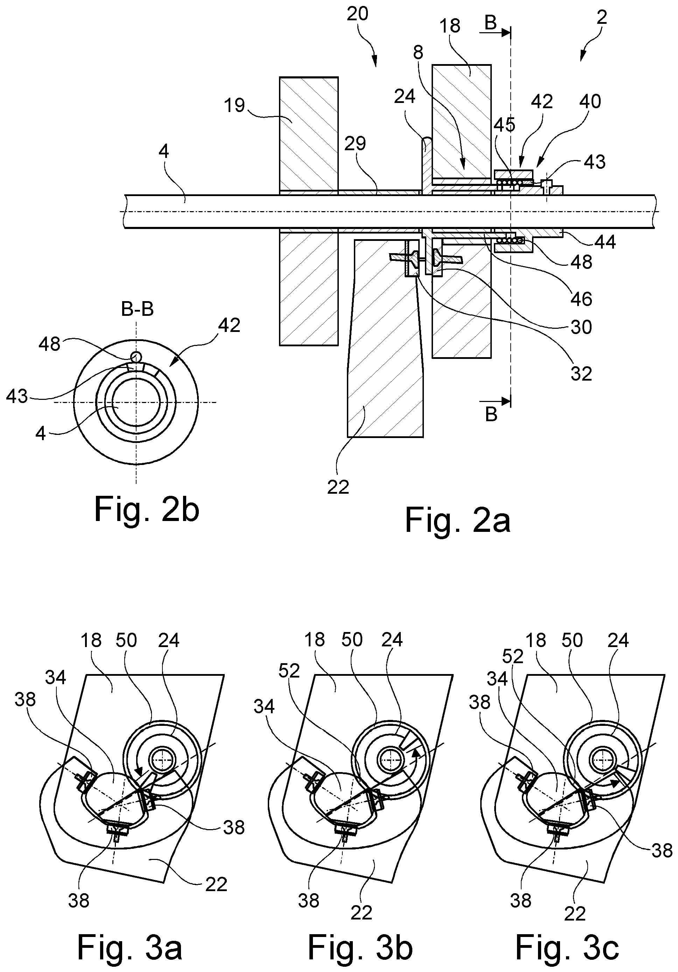

In Fig. 2a wird eine Abwandlung in Form einer Verriegelungsvorrichtung 2 mit einer Spielausgleichsvorrichtung 40 gezeigt. Hier ist die Scheibe 24 nicht über die Welle-Nabe-Verbindung 6 mit der Sicherungsstange 4 verbunden, sondern über eine Torsionsfeder-Kupplung 42. Diese weist ein erstes Kupplungselement 44, ein zweites Kupplungselement 46 und eine dazwischenliegende Torsionsfeder 48 auf. Das zweite Kupplungselement 46 geht in den Wellenabschnitt 8 über. Dies hat den Vorteil, dass das Drehmoment auf einen bestimmten Höchstwert begrenzt ist und folglich bei geänderten Spaltmaßen eine Überlastung des Antriebs der Scheibe 24 verhindert werden kann. Zudem ist die Scheibe 24 dadurch axial verschieblich und damit schwimmend gelagert. Eine Distanzbuchse 29 zwischen der Scheibe 24 und dem gegenüberliegenden zweiten Gabelelement 19 dient analog zu der Distanzbuchse 25 der Vorpositionierung der Scheibe 24.

Fig. 2b zeigt eine Schnittdarstellung der Torsionsfeder-Kupplung 42. Hier ist neben der Torsionsfeder 48 eine Nocke 43 ersichtlich, die in dem ersten Kupplungselement 44 angeordnet ist und mit einem entsprechenden Vorsprung 45 in dem zweiten Kupplungselement 46 bei Rückdrehung in Eingriff geraten kann, sodass eine Rückdrehung der Scheibe 24 unterstützt wird. Die Nocke 43 ist beispielhaft als Sektor eines in das erste Kupplungselement 44 integrierten Hohlzylinders ausgeführt und erstreckt sich dabei über einen Winkel von etwa 20°.

In den Fig. 3a bis 3c wird die Bewegung der Scheibe 24 in aufeinanderfolgenden Darstellungen gezeigt. Fig. 3a zeigt einen Anfangszustand der Scheibe 24, in der das Schiebeelement 34 eingeschoben bzw. entfernbar ist. Hier ist ein Bereich geringster Dicke in dem Zwischenraum 16 angeordnet und das Klauenelement 22 und das erste Gabelelement 18 sind locker zueinander angeordnet.

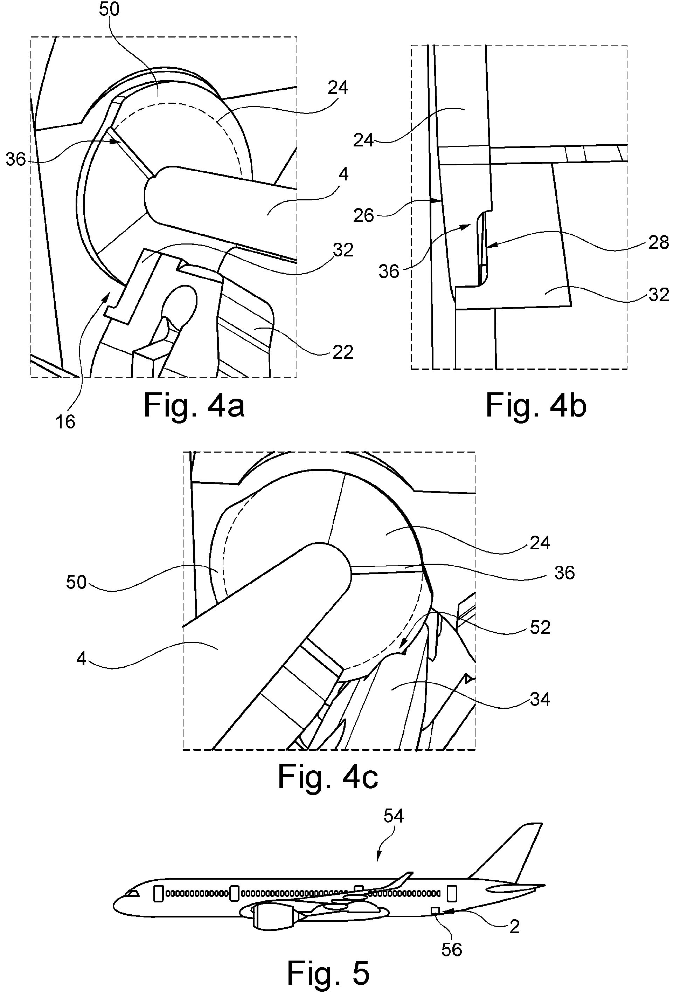

Wie in Fig. 3b gezeigt wird, kann durch Verdrehen der Scheibe 24 ein radialer Vorsprung 50 der Scheibe 24 in eine Ausnehmung 52 des Schiebeelements 34 geraten, sodass das Schiebeelement 34 vor dem Verschieben gesichert wird. Die Ausführungen des Vorsprungs 50 wird in den Fig. 4a und 4c etwas besser ersichtlich.

In Fig. 3c ist ein Endzustand gezeigt, in dem die Scheibe 24 ihre größtmögliche lokale Dicke in dem Zwischenraum 16 aufweist und die Kontaktplatten 30 und 32 bündig mit der Scheibe 24 in Kontakt stehen.

Fig. 4a bis 4c zeigen die Scheibe 24 während ihrer Rotation in dem Zwischenraum 16. Hier ist mit einer gestrichelten Linie angedeutet, dass ein großer Teilumfang der Scheibe 24 mit einem Vorsprung 50 versehen ist, der einen Teil der Scheibe 24 darstellt und einen größeren Durchmesser als der übrige Teil der Scheibe 24 aufweist. Weiterhin wird der Teilsektor 36 angedeutet, in dem die Dicke der Scheibe 24 zwischen der geringsten und der höchsten Dicke übergeht. In Fig. 4c ist weiterhin die Ausnehmung 52 in dem Schiebeelement 34 besser erkennbar.

Schließlich zeigt Fig. 5 ein Flugzeug 54 mit einem Frachttor 56, das mit einer Verriegelungsvorrichtung 2 verriegelbar ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Verriegelungsvorrichtung
- 4: Sicherungsstange
- 5: kraftschlüssige Kupplung
- 6: Welle-Nabe-Verbindung
- 8: Wellenabschnitt
- 10: Spielausgleichsvorrichtung
- 12: Außenverzahnung
- 14: Innenverzahnung
- 16: Zwischenraum
- 18: erstes Gabelelement / erste Komponente
- 19: zweites Gabelelement
- 20: Gabelbeschlag
- 22: Klauenelement / zweite Komponente
- 24: Scheibe
- 25: Distanzbuchse
- 26: erste Seite
- 28: zweite Seite
- 29: Distanzbuchse
- 30: erste Kontaktplatte
- 32: zweite Kontaktplatte
- 34: Schiebeelement
- 36: Teilsektor
- 38: Kontaktpunkt
- 40: Spielausgleichsvorrichtung
- 42: Torsionsfeder-Kupplung
- 43: Nocke
- 44: erstes Kupplungselement
- 46: zweites Kupplungselement
- 48: Torsionsfeder
- 50: radialer Vorsprung
- 52: Ausnehmung
- 54: Flugzeug
- 56: Frachttor

## Patentansprüche

1. Spielausgleichsvorrichtung (10, 40) zur Anordnung an einer Oberfläche einer ersten Komponente (18), die mit einer Oberfläche einer zweiten Komponente (22) einen Zwischenraum (16) variabler Größe einschließt, aufweisend:
eine rotierbare Scheibe (24) mit einer ersten Seite (26) und einer davon abgewandten zweiten Seite (28),
eine Kupplung (5, 42), die mit einer Antriebswelle (4) verbindbar ist, und
einen drehbar gelagerten Wellenabschnitt (8), an dem die Scheibe (24) angeordnet ist und der mit der Kupplung (5, 42) verbunden ist,
wobei die erste Seite (26) der rotierbaren Scheibe (24) eben ist,
wobei die rotierbare Scheibe (24) in dem Zwischenraum (16) an der ersten Komponente (18) lagerbar ist, sodass die erste Seite (26) mit der ersten Komponente (18) zumindest bereichsweise in Flächenkontakt geraten und mit der zweiten Seite (28) von der ersten Komponente (18) abstehen kann,
wobei die zweite Seite (28) zumindest über eine Sektorfläche eine in Umfangsrichtung ansteigende Dicke als lokales Abstandsmaß zwischen der ersten Seite (26) und der zweiten Seite (28) aufweist, und
wobei die Kupplung (5, 42) dazu ausgebildet ist, eine Rotation der Antriebswelle (4) auf die rotierbare Scheibe (24) zu übertragen, sodass die Scheibe (24) in einen bündigen Flächenkontakt mit der ersten Komponente (18) und der zweiten Komponente (22) gerät,
**dadurch gekennzeichnet, dass** die Scheibe (24) rund ist und zumindest in einem Bereich einen radialen Vorsprung (50) aufweist, der zur axialen Verriegelung in eine radiale Ausnehmung (52) rotierbar ist.

2. Spielausgleichsvorrichtung (10, 40) nach Anspruch 1,
wobei die Kupplung (5, 42) eine kraftschlüssige Kupplung (5) umfasst, die dazu ausgebildet ist, einen Drehwinkel zwischen der Scheibe (24) und der Antriebswelle (4) bei der Montage manuell auf ein Maß des betreffenden Zwischenraums (16) anzupassen.

3. Spielausgleichsvorrichtung (10, 40) nach Anspruch 1 oder 2,
wobei die Kupplung (5, 42) dazu ausgebildet ist, die Rotation der Antriebswelle (4) nur bis zu einem vorgebbaren maximalen Drehmoment zu übertragen.

4. Spielausgleichsvorrichtung (10, 40) nach Anspruch 1 oder 3,
wobei die Kupplung (5, 42) ein erstes Kupplungselement (44) und ein zweites Kupplungselement (46) aufweist, die konzentrisch zueinander angeordnet und durch eine Torsionsfeder (48) miteinander gekoppelt sind.

5. Spielausgleichsvorrichtung (10, 40) nach einem der vorhergehenden Ansprüche,
wobei die zweite Seite (28) eine Form aufweist, durch die die Scheibe (24) selbsthemmend ist, sodass eine axial auf die zweite Seite (28) einwirkende Kraft nicht zu einer Rotation der Scheibe (24) führt.

6. Spielausgleichsvorrichtung (10, 40) nach einem der vorhergehenden Ansprüche,
wobei die zweite Seite (28) eine Helixform und eine Steigung von 2 bis 4° aufweist.

7. Spielausgleichsvorrichtung (10, 40) nach einem der vorhergehenden Ansprüche,
wobei die Scheibe (24) schwimmend gelagert ist.

8. Verriegelungsvorrichtung (2) für ein Tor (56), insbesondere ein Frachttor (56), eines Fahrzeugs (54), aufweisend
mindestens einen Gabelbeschlag (20) mit zwei voneinander beabstandeten Gabelelementen (18, 19),
mindestens ein Klauenelement (22), das in dem mindestens einen Gabelbeschlag (20) zwischen den Gabelelementen (18, 19) platzierbar ist,
ein Schiebeelement (34) zum Herstellen einer formschlüssigen Verbindung mit dem Gabelbeschlag (20) und dem Klauenelement (22), und
mindestens eine Spielausgleichsvorrichtung (10, 40) nach einem der vorhergehenden Ansprüche,
wobei das Klauenelement (22) eine lichte Breite aufweist, die geringer als der Abstand zwischen den Gabelelementen (18, 19) ist,
wobei eines der Gabelelemente (18, 19) des betreffenden Gabelbeschlags (20) die erste Komponente (18) und das Klauenelement (22) die zweite Komponente (22) ist, und
wobei die Scheibe (24) zwischen dem betreffenden Gabelelement (18, 19) und dem Klauenelement (22) angeordnet ist, um den Zwischenraum (16) zwischen dem betreffenden Gabelelement (18, 19) und dem Klauenelement (22) auszufüllen.

9. Verriegelungsvorrichtung (2) nach Anspruch 8,
ferner aufweisend eine drehbare Sicherungsstange (4), die mindestens eine Sicherungsnocke aufweist,
wobei die jeweilige Kupplung (5, 42) der mindestens einen Spielausgleichsvorrichtung (10, 40) mit der drehbaren Sicherungsstange (4) als Antriebswelle (4) verbunden ist, und
wobei die mindestens eine Sicherungsnocke in einem verriegelten Zustand des Tors durch Drehen der Sicherungsstange (4) in mindestens eine Ausnehmung (52) in dem Schiebeelement (34) einbringbar ist.

10. Verriegelungsvorrichtung (2) nach Anspruch 8 oder 9,
wobei die Spielausgleichsvorrichtung (10, 40) nach Anspruch 5 ausgebildet ist und die Ausnehmung (52) in dem Schiebeelement (34) angeordnet ist.

11. Verriegelungsvorrichtung nach einem der Ansprüche 8 bis 10, aufweisend
mehrere voneinander beabstandete Gabelbeschläge (20),
mehrere Klauenelemente (22), die jeweils einem Gabelbeschlag (20) zugeordnet sind, und
für mindestens einen Gabelbeschlag (20) mindestens eine Spielausgleichsvorrichtung (10, 40) nach einem der Ansprüche 1 bis 7,
wobei die Kupplungen (5, 42) der Spielausgleichsvorrichtungen (10, 40) mit derselben Antriebswelle (4) verbunden sind.

12. Verriegelungsvorrichtung (2) nach einem der Ansprüche 8 bis 11,
wobei jedem Paar aus Gabelbeschlag (20) und Klauenelement (22) zwei Spielausgleichsvorrichtungen (10, 40) zugeordnet sind, die beidseitig an das Klauenelement (22) anschließen.

13. Fahrzeug (54), aufweisend einen Rumpf mit mindestens einem schwenkbar daran angeordneten Tor (56), sowie einer Verriegelungsvorrichtung (2) nach einem der Ansprüche 8 bis 12.

14. Fahrzeug (54) nach Anspruch 13, wobei das Fahrzeug (54) ein Flugzeug (54) ist und das Tor (56) ein Frachttor (56) des Flugzeugs (54) ist.

## Claims

1. A clearance compensation device (10, 40) for arrangement on a surface of a first component (18) which encloses a gap (16) of variable size with a surface of a second component (22), comprising:
a rotatable disc (24) with a first side (26) and a second side (28) facing away therefrom,
a coupling (5, 42), which is connectable to a drive shaft (4), and
a rotatably mounted shaft portion (8) on which the disc (24) is arranged and which is connected to the coupling (5, 42),
wherein the first side (26) of the rotatable disc (24) is planar,
wherein the rotatable disc (24) is mountable in the gap (16) on the first component (18), such that the first side (26) can come into surface contact with the first component (18) at least in regions and can project from the first component (18) with the second side (28),
wherein the second side (28) has, at least over a sector area, a thickness which increases in the circumferential direction as a local distance dimension between the first side (26) and the second side (28), and
wherein the coupling (5, 42) is designed to transmit a rotation of the drive shaft (4) to the rotatable disc (24), such that the disc (24) comes into flush surface contact with the first component (18) and the second component (22),
**characterised in that** the disc (24) is round and has, at least in one region, a radial projection (50) which is rotatable into a radial recess (52) for axial locking.

2. The clearance compensation device (10, 40) according to claim 1,
wherein the coupling (5, 42) comprises a force-fit coupling (5) which is designed to manually adapt a rotation angle between the disc (24) and the drive shaft (4) to a dimension of the relevant gap (16) during assembly.

3. The clearance compensation device (10, 40) according to claim 1 or 2,
wherein the coupling (5, 42) is designed to transmit the rotation of the drive shaft (4) only up to a predefinable maximum torque.

4. The clearance compensation device (10, 40) according to claim 1 or 3,
wherein the coupling (5, 42) has a first coupling element (44) and a second coupling element (46) which are arranged concentrically with respect to one another and are coupled to one another by a torsion spring (48).

5. The clearance compensation device (10, 40) according to one of the preceding claims,
wherein the second side (28) has a shape by means of which the disc (24) is self-locking, such that a force acting axially on the second side (28) does not lead to a rotation of the disc (24).

6. The clearance compensation device (10, 40) according to one of the preceding claims,
wherein the second side (28) has a helical shape and a pitch of 2 to 4°.

7. The clearance compensation device (10, 40) according to one of the preceding claims,
wherein the disc (24) is mounted on a float bearing.

8. A locking device (2) for a gate (56), in particular a cargo gate (56), of a vehicle (54), comprising
at least one fork fitting (20) with two fork elements (18, 19) spaced apart from one another,
at least one claw element (22) which can be placed in the at least one fork fitting (20) between the fork elements (18, 19),
a sliding element (34) for producing a form-fitting connection to the fork fitting (20) and the claw element (22), and
at least one clearance compensation device (10, 40) according to one of the preceding claims,
wherein the claw element (22) has a clear width which is smaller than the distance between the fork elements (18, 19),
wherein one of the fork elements (18, 19) of the relevant fork fitting (20) is the first component (18) and the claw element (22) is the second component (22), and
wherein the disc (24) is arranged between the relevant fork element (18, 19) and the claw element (22) in order to fill the gap (16) between the relevant fork element (18, 19) and the claw element (22).

9. The locking device (2) according to claim 8,
further comprising a rotatable locking bar (4) which has at least one locking cam,
wherein the respective coupling (5, 42) of the at least one play compensation device (10, 40) is connected to the rotatable locking bar (4) as the drive shaft (4), and
wherein, in a locked state of the gate, the at least one locking cam can be introduced into at least one recess (52) in the sliding element (34) by rotating the locking bar (4).

10. The locking device (2) according to claim 8 or 9,
wherein the clearance compensation device (10, 40) is designed according to claim 5 and the recess (52) is arranged in the sliding element (34).

11. The locking device according to one of claims 8 to 10, comprising
a plurality of fork fittings (20) spaced apart from one another,
a plurality of claw elements (22) which are each assigned to a fork fitting (20), and
for at least one fork fitting (20) at least one clearance compensation device (10, 40) according to one of claims 1 to 7,
wherein the couplings (5, 42) of the clearance compensation devices (10, 40) are connected to the same drive shaft (4).

12. The locking device (2) according to one of claims 8 to 11,
wherein each pair of fork fitting (20) and claw element (22) is assigned two clearance compensation devices (10, 40) which adjoin the claw element (22) on both sides.

13. A vehicle (54), comprising a fuselage with at least one gate (56) arranged pivotably thereon, and a locking device (2) according to one of claims 8 to 12.

14. The vehicle (54) according to claim 13, wherein the vehicle (54) is an aircraft (54) and the gate (56) is a cargo gate (56) of the aircraft (54).

## Revendications

1. Dispositif d'équilibrage de jeu (10, 40) destiné à être disposé sur une surface d'un premier composant (18) qui, avec une surface d'un deuxième composant (22), enferme un espace intermédiaire (16) de taille variable, comprenant :
un disque rotatif (24) avec un premier côté (26) et un deuxième côté (28) opposé à celui-ci,
un embrayage (5, 42) qui peut être relié à un arbre d'entraînement (4), et
une section d'arbre (8) montée à rotation, sur laquelle le disque (24) est disposé et qui est reliée à l'embrayage (5, 42),
dans lequel le premier côté (26) du disque rotatif (24) est plan,
dans lequel le disque rotatif (24) peut être monté dans l'espace intermédiaire (16) sur le premier composant (18) de sorte que le premier côté (26) vienne en contact de surface au moins par endroits avec le premier composant (18) et puisse faire saillie du premier composant (18) avec le deuxième côté (28),
dans lequel le deuxième côté (28) comprend, au moins sur une surface de secteur, une épaisseur croissante dans la direction périphérique en tant que mesure de distance locale entre le premier côté (26) et le deuxième côté (28), et
dans lequel l'embrayage (5, 42) est conçu pour transmettre une rotation de l'arbre d'entraînement (4) au disque rotatif (24) de sorte que le disque (24) vienne en contact de surface affleurant avec le premier composant (18) et le deuxième composant (22),
**caractérisé en ce que** le disque (24) est rond et comprend, au moins dans une région, une saillie radiale (50) qui peut tourner dans un évidement radial (52) pour le verrouillage axial.

2. Dispositif d'équilibrage de jeu (10, 40) selon la revendication 1,
dans lequel l'embrayage (5, 42) comprend un embrayage à friction (5) qui est conçu pour adapter manuellement un angle de rotation entre le disque (24) et l'arbre d'entraînement (4) lors du montage à une mesure de l'espace intermédiaire (16) concerné.

3. Dispositif d'équilibrage de jeu (10, 40) selon la revendication 1 ou 2,
dans lequel l'embrayage (5, 42) est conçu pour transmettre la rotation de l'arbre d'entraînement (4) uniquement jusqu'à un couple maximal prédéfinissable.

4. Dispositif d'équilibrage de jeu (10, 40) selon la revendication 1 ou 3,
dans lequel l'embrayage (5, 42) comprend un premier élément d'embrayage (44) et un deuxième élément d'embrayage (46) qui sont disposés de manière concentrique l'un par rapport à l'autre et qui sont couplés l'un à l'autre par un ressort de torsion (48).

5. Dispositif d'équilibrage de jeu (10, 40) selon l'une quelconque des revendications précédentes,
dans lequel le deuxième côté (28) comprend une forme par laquelle le disque (24) est autobloquant de sorte qu'une force agissant axialement sur le deuxième côté (28) ne conduise pas à une rotation du disque (24).

6. Dispositif d'équilibrage de jeu (10, 40) selon l'une quelconque des revendications précédentes,
dans lequel le deuxième côté (28) comprend une forme hélicoïdale et un pas de 2 à 4°.

7. Dispositif d'équilibrage de jeu (10, 40) selon l'une quelconque des revendications précédentes,
dans lequel le disque (24) est monté flottant.

8. Dispositif de verrouillage (2) pour une porte (56), en particulier une porte de fret (56), d'un véhicule (54), comprenant
au moins une ferrure à fourche (20) avec deux éléments de fourche (18, 19) espacés l'un de l'autre,
au moins un élément de griffe (22) qui peut être placé dans l'au moins une ferrure à fourche (20) entre les éléments de fourche (18, 19),
un élément coulissant (34) pour établir une liaison par complémentarité de forme avec la ferrure à fourche (20) et l'élément de griffe (22), et
au moins un dispositif d'équilibrage de jeu (10, 40) selon l'une quelconque des revendications précédentes,
dans lequel l'élément de griffe (22) présente une largeur libre inférieure à l'écart séparant les éléments de fourche (18, 19),
dans lequel l'un des éléments de fourche (18, 19) de la ferrure à fourche (20) concernée est le premier composant (18) et l'élément de griffe (22) est le deuxième composant (22), et
dans lequel le disque (24) est disposé entre l'élément de fourche (18, 19) concerné et l'élément de griffe (22) afin de remplir l'espace intermédiaire (16) entre l'élément de fourche (18, 19) concerné et l'élément de griffe (22).

9. Dispositif de verrouillage (2) selon la revendication 8,
comprenant en outre une barre de blocage (4) rotative qui comprend au moins une came de blocage,
dans lequel l'embrayage (5, 42) respectif de l'au moins un dispositif de compensation de jeu (10, 40) est relié à la barre de blocage (4) rotative en tant qu'arbre d'entraînement (4), et
dans lequel l'au moins une came de blocage peut être introduite dans un état verrouillé de la porte par rotation de la barre de blocage (4) dans au moins un évidement (52) dans l'élément coulissant (34).

10. Dispositif de verrouillage (2) selon la revendication 8 ou 9,
dans lequel le dispositif d'équilibrage de jeu (10, 40) est conçu selon la revendication 5 et l'évidement (52) est disposé dans l'élément coulissant (34).

11. Dispositif de verrouillage selon l'une quelconque des revendications 8 à 10, comprenant
plusieurs ferrures à fourche (20) espacées les unes des autres,
plusieurs éléments de griffe (22) qui sont respectivement associés à une ferrure à fourche (20), et
pour au moins une ferrure à fourche (20), au moins un dispositif d'équilibrage de jeu (10, 40) selon l'une quelconque des revendications 1 à 7,
dans lequel les embrayages (5, 42) des dispositifs d'équilibrage de jeu (10, 40) sont reliés au même arbre d'entraînement (4).

12. Dispositif de verrouillage (2) selon l'une quelconque des revendications 8 à 11,
dans lequel à chaque paire composée de la ferrure à fourche (20) et de l'élément de griffe (22) sont associés deux dispositifs d'équilibrage de jeu (10, 40) qui se raccordent des deux côtés à l'élément de griffe (22).

13. Véhicule (54), comprenant une coque avec au moins une porte (56) disposée de manière pivotante sur celle-ci, ainsi qu'un dispositif de verrouillage (2) selon l'une quelconque des revendications 8 à 12.

14. Véhicule (54) selon la revendication 13, dans lequel le véhicule (54) est un avion (54) et la porte (56) est une porte de fret (56) de l'avion (54).
